# EUROPEAN PATENT APPLICATION

(11) **EP 2 197 159 A1**
(43) Date of publication of application: **16.06.2010**
(21) Application number: 09178932.1
(22) Date of filing: 11.12.2009
(51) Int. Cl.: H04L 12/46, H04L 12/56

(54) **Group-learning method for a network having a tree topology**

(30) Priority: 12.12.2008 IT TO20080926
(71) Applicant: SELEX COMMUNICATIONS S.p.A., 16151 Genova (IT)
(72) Inventor: Armani, Claudio, 16129 Genova (IT); Legato, Natalino, 56121 Pisa (IT); Loreti, Pierpaolo, 00178 Roma (IT); Bianchi, Giuseppe, 00197 Roma (IT)
(74) Representative: Jorio, Paolo

(57) **Abstract**

A group-learning method for a network (1) that has a tree topology and includes a plurality of nodes (2), each node being provided with a network address, being connected to other nodes by means of a plurality of ports (p1-p7), and implementing a data structure containing a plurality of addresses of nodes, each associated to a corresponding port (Pₒᵤₜ) of the node, the plurality of ports including at least one root port and one reception port. The method includes the steps of: a) for each node that changes root port by replacing an old root port with a new root port, sending through the new root port a current updating message, containing a set of addresses of nodes; b) for each node that receives the current updating message from a respective reception port (Pₒᵤₜ), storing the current updating message and the reception port for a storage time (Tₘ); verifying the presence in memory of possible previous updating messages; and updating the data structure on the basis of the set of addresses of nodes, of the reception port, and of the possible presence in memory.

## Description

The present invention relates to a method for managing a network having a tree topology, in particular with reference to the steps linked to the change in topology of the network. Specifically, the invention regards a group-learning method following upon the change of topology.

As is known, a number of networks of the "Local Area Network" (LAN) type that comply with the standard "Institute of Electrical and Electronics Engineers 802" (IEEE 802) can be interconnected by using so-called "Media Access Control Bridges", also known as MAC bridges, which enable connection of nodes belonging to different LANs so as to enable them to communicate as if they were in one and the same LAN.

As compared to the stacks of layers described in the "International Organization for Standardization - Open Systems Interconnection" (ISO-OSI) model and "Transport Control Protocol/Internet Protocol" (TCP/IP) model, the MAC bridge operates in the first two layers of the aforementioned stacks, known as "physical layer" and "data-link layer", and in particular without extending beyond the MAC service boundary, i.e., limiting to the physical layer and to the MAC sublayer of the data-link layer.

Each MAC bridge comprises at least two ports, by means of which it can connect up to corresponding LANs, a MAC relay entity having the function of connecting the ports of the MAC bridge together, and moreover higher-layer entities, which include a spanning-tree protocol entity, operation of which is described in greater detail hereinafter. The MAC bridge and the ports of the MAC bridge itself are provided with respective MAC addresses, different from one another; in particular, the MAC address of the MAC bridge is also known as "bridge identifier" (BID).

In detail, via its own ports, the MAC bridge can connect up to other MAC bridges, and moreover to user terminals, which connect up to the MAC bridge to reach LANs other than its own. In what follows, reference is generically made to MAC bridges and user terminals as "network devices".

The main functions performed by a MAC bridge are transmission and filtering of frames. A frame has at least two MAC addresses: a source MAC address, corresponding to the MAC address of the network device that has generated the frame, and a destination MAC address, corresponding to the MAC address of the network device to which the frame is directed, irrespective of whether the network device that has generated the frame is connected to the network device to which the frame is directed indirectly or indirectly, i.e., via intermediate MAC bridges. Some technologies, in particular wireless technologies, specify more than two MAC addresses within a frame by including, for example, the MAC addresses of the radio transmitter and/or receiver, said additional addresses not being important for the purposes of the operations performed by the MAC bridge and consequently for the purposes of the present invention. Furthermore, the MAC bridge is responsible for managing the information necessary for carrying out said transmission and filtering.

In detail, in compliance with the specifications of operation of MAC bridges contained in the IEEE 802.1D standard, among the operations performed by a MAC bridge are: creation and management ("learning process") of a filtering database on the basis of frames received by other network devices, in particular data frames known as "Message Protocol Data Units" (MPDUs); and forwarding of frames ("forwarding process"), i.e., transmission to other network devices of frames received by the MAC bridge, said transmission of frames occurring on the basis of the information contained in the filtering database, as described in greater detail hereinafter.

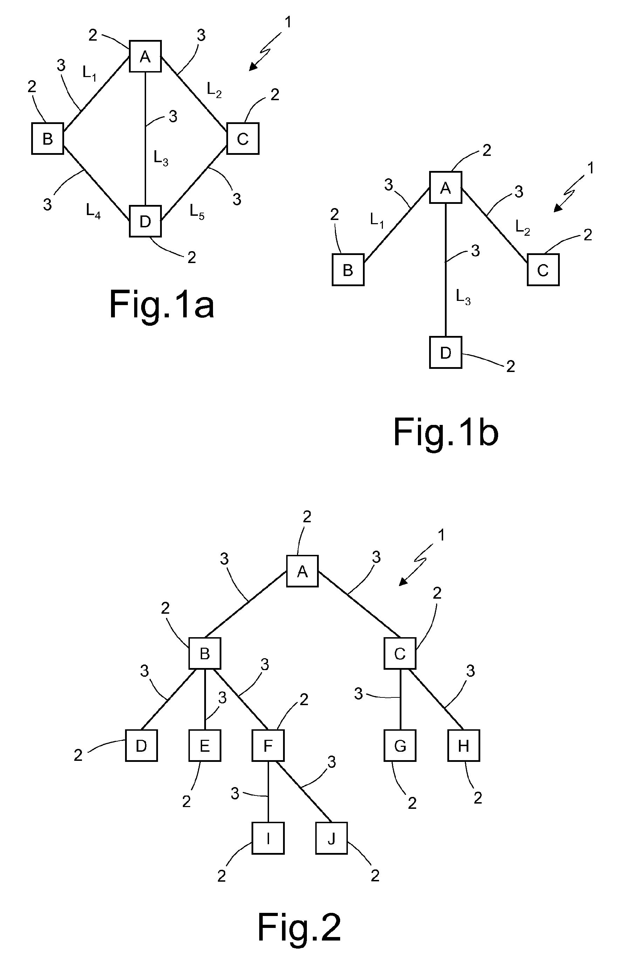

In addition, MAC bridges have the function of executing algorithms of the spanning-tree type so as to prevent formation of loops within a network. For example, consider the network 1 illustrated in Figure 1a, comprising four MAC bridges 2, designated respectively by A, B, C, and D, connected to one another by means of links 3, designated as L₁-L₅, in such a way that the network forms three loops, respectively formed by the links L₁, L₂, L₄, L₅, by the links L₁, L₃, L₄, and by the links L₂, L₃, L₅. The distributed execution, by the MAC bridges A-D, of a spanning-tree algorithm leads to the elimination of the aforementioned loops, for example by means of suppression of the links L₄ and L₅, as illustrated in Figure 1b.

In order to create and manage a spanning tree, the 802.1D standard, in its various releases, has specified two protocols: the Spanning-Tree Protocol (STP) and, starting from the 802.1D-2004 standard, the Rapid Spanning-Tree Protocol (RSTP). The 802.1D-2004 standard has officially adopted RSTP and rendered obsolete STP, which, however, continues to be supported in numerous commercial products.

The execution of a protocol designed to provide a spanning-tree protocol (STP or RSTP) requires the MAC bridges to exchange with one another the information regarding the network that they have available, by means of transmission of special frames known as Bridge-Protocol Data Units (BPDUs). Furthermore, the execution of a spanning-tree algorithm involves the dynamic assignment of an operating state, referred to in what follows for reasons of brevity as "state", to each port of the MAC bridge that executes said algorithm. In particular, and with specific reference to the STP protocol, one of the following states is assigned to each port of the MAC bridge:
- forwarding state, associated to ports that are used by the MAC bridge for relaying and for receiving data frames, said frames containing information, on the basis of which the MAC bridge updates its own filtering database;
- listening state, associated to ports that are used by the MAC bridge for receiving and relaying only BPDU frames, and for updating on the basis of said BPDUs the information regarding the network topology;
- learning state, associated to ports that are used by the MAC bridge for receiving and relaying BPDU frames and consequently updating the information regarding the network topology (as in the listening state) and moreover for receiving data frames (MPDUs), reading the source addresses contained in the data frames received, and updating the filtering database accordingly, without, however, said data frames being forwarded;
- blocking state, associated to ports activation of which would cause a topological loop; said ports receive, but do not transmit, BPDU frames; moreover, they do not transmit or receive data frames, but can pass to the forwarding state, passing through the intermediate listening and learning states, in the case of topology changes in the network (links added or interrupted), on the basis of information supplied by the spanning-tree algorithm and determined on the basis of the BPDU frames received by the ports of the MAC bridge;
- disabled state, not strictly regarding STP and equivalent to a non-active port, hence different from the blocking state, where the port, albeit not forwarding frames, remains in any case active and participates in the operations defined by the STP.

Omitted is the description of the states of the ports in the specific case of the RSTP (in particular, the distinction introduced between state of a port and role of a port, the consequent reorganization and redefinition of states and roles, and the new states/roles introduced), said description not being important for the purposes of the present invention, which applies to both STP and RSTP.

By managing the aforementioned states of the ports dynamically and then blocking some ports on the basis of the physical network topology, the MAC bridges generate the so-called active topology, which comprises the links connected to ports in the forwarding state and the MAC bridges to which said ports belong, and prevent formation of closed loops within the network. In particular, to prevent formation of closed loops, the switching of the states of the ports occurs in such a way that, in the passage from blocking state to forwarding state, a procedure of transition is carried out having modalities and temporal duration that depend upon the spanning-tree algorithm adopted.

The ports and the corresponding states are involved also in the operations of creation and management ("learning process") of the filtering database, which contains information that enables the MAC bridge to carry out forwarding of the frames. In detail, at each instant of time to, the filtering database contains an entry for each network device from which the MAC bridge has received at least one data frame during a time interval that precedes said instant of time to and that is known as ageing time Tₐ. In turn, and as described in greater detail hereinafter, each entry comprises the MAC address of the corresponding network device, an identifier of a forwarding port Pₒᵤₜ, and a counter regarding the passage of the aforementioned ageing time Tₐ.

The updating of the filtering database, also known as "learning procedure", is carried out whenever the MAC bridge receives a frame (except for the frames of a BPDU type), which contains, for all the families of protocols that comply with the IEEE 802 standard, the MAC address of the network device that has generated the frame (source MAC address), and the MAC address of the network device to which the frame is destined (destination MAC address).

In detail, given a frame received at instant to on a reception port Pin of the MAC bridge, the MAC bridge examines the source MAC address contained in the frame and verifies whether present within the filtering database is an entry corresponding to said source MAC address, the possible presence of said entry indicating that frames issued by the network device having the source MAC address have already been received.

In the case where this entry is absent, the MAC bridge creates it, entering as MAC address the source MAC address contained in the frame and as forwarding port Pₒᵤₜ the reception port Pin by which the frame was received; the counter is set in such a way that it will indicate the instant to.

In the case where this entry is present, it is updated by entering as forwarding port Pₒᵤₜ the reception port Pin, setting the counter in such a way that it will indicate the instant to, and leaving the MAC address unaltered.
The updating of the filtering database further comprises operations of elimination of obsolete entries.

In the case of absence of variations of topology, the timing of elimination depends upon the value assumed by a parameter known as "ageing-time parameter". In fact, an entry is deleted after there has elapsed from the instant in which the entry was created or updated a time longer than the value assumed by the ageing-time parameter.

In the case of topology changes, the modalities and the time of elimination, like the modalities of notification of the topology changes themselves, depend upon the specific spanning-tree protocol adopted.

In the particular case of STP, the topology changes are notified to the MAC bridge setting a bit (bit TC) contained in the BPDU frames at 1. When a MAC bridge receives a BPDU frame with bit TC equal to 1, it sets the value of the ageing-time parameter equal to a value indicated by a parameter contained also in the BPDU frame and known as "forward-delay parameter", in such a way that all the entries will be deleted within a time equal to the value indicated by said forward-delay parameter.

In the particular case of RSTP, the topology changes are notified by the MAC bridges by sending a topology-change-notification frame ("Topology Change Notification BPDU", TCN BPDU). When a MAC bridge receives a TCN BPDU frame, it immediately eliminates or "flushes" all the entries associated to all the ports of the MAC bridge, except for the entries associated to the reception port Pin that receives said frame.

Typically, the topology changes occur following upon displacement of one or more MAC bridges of the network since said displacements can render the MAC addresses of the MAC bridges that have changed position obsolete, with the consequence that the corresponding entries in the filtering database must be updated. In fact, each change of link due to the displacement of a MAC bridge requires updating of the filtering database of all the MAC bridges of the network as regards the MAC addresses of the displaced MAC bridge and of all the network devices affiliated to said MAC bridge, i.e., belonging to the subtree of the spanning tree having said MAC bridge as vertex.

The task of the filtering database is to enable forwarding of the frames received. In particular, given the reception port Pᵢₙ, each frame received is evaluated by an ingress function associated to said reception port Pin, which determines, on the basis of the state of the reception port Pin and of possible criteria of filtering and control of access established for said reception port Pin during configuration of the MAC bridge, whether the frame must be further forwarded or else rejected.

In the case where the frame must be forwarded, the MAC bridge examines the destination MAC address contained in the frame received. In the case where present in the filtering database is an entry the MAC address of which is the same as the destination MAC address contained in the frame, the MAC bridge forwards the frame on the forwarding port Pₒᵤₜ indicated in this entry. Otherwise, the frame is replicated and forwarded on all the ports of the MAC bridge, except for the aforementioned reception port Pin by which it was received.

It should be noted that the learning procedure, based upon the source MAC address of the frame and carried out whenever the MAC bridge receives a frame, and the subsequent forwarding of the frame, based upon the destination MAC address of the frame itself, are independent of one another.

By way of example, consider the network 1 illustrated in Figure 2, where only the links 3 of the active topology are shown, i.e., only the MAC bridges forming part of the active topology are shown (in the case in point, the MAC bridges identified by A-J), and not the user terminals possibly connected to said MAC bridges A-J; in what follows, reference will be made to said MAC bridges A-J, belonging to the active topology, also with the term of "nodes 2". The following premises are also set:
- the node A, at the vertex of the spanning tree, is defined as "root bridge" and, in compliance with STP/RSTP, is the node 2 having the lowest MAC address;
- for each node B-J other than the root bridge A, the port that enables connection of said node B-J to the root bridge A is defined as "root port", the connection possibly being either direct or indirect, i.e., comprising a chain of intermediate nodes 2; for example, given the node F, the root port is the port coming under which is the connection between the node F and the node B;
- each node 2 has a level, defined as the number of links 3 present between the node 2 considered and the root bridge A (for example, the node F has a level equal to two; the root bridge has a level equal to zero);
- given a node 2 that receives a frame, for convenience of exposition it may be said that associated to said frame is a direction of "ascent" if it is received by a non-root port of said node, or else a direction of "descent", if it is received by the root port of said node; i.e., a frame is said to be "in descent" when it descends with respect to the tree topology (i.e., it moves away from the root bridge A) and "in ascent" when it ascends (i.e., it approaches the root bridge A); for example, in Figure 2, a frame received by the node F has a direction of descent if it is received by the port coming under which is the link 3 present between the node F and the node B, whereas it has a direction of ascent if it is received by one of the two ports coming under which are the links with the nodes I and J;
- each port is uniquely identified in the framework of the node 2 to which it belongs; in particular, each port is locally identified by means of an identifier that depends upon the specific protocol belonging to the IEEE 802 family adopted; for the purposes of the 802.1D protocol and of the notification of the port identifiers in the BPDU frames, each port is uniquely identified by means of a numeric value comprised between 0 and 255; possibly, a priority field, which is associated to the port during configuration of the MAC bridge, is associated to said identifier.

It should be noted that, as regards identification of the ports, in the case of a network 1 of a wired type and operating in compliance with a protocol for wired networks, such as, for example, the IEEE 802.3 (Ethernet) protocol, the links are physically inserted in numbered slots present in the MAC bridges. In this case, the identifier of a port coincides with the number of the slot in which the link coming under the port itself is inserted.

In the case of a network 1 of a wireless type operating in compliance with protocols for wireless networks, such as, for example, IEEE 802.11 or IEEE 802.16, it is not possible to define a physical slot. In this case, each port remains in any case uniquely identified via an identifier assigned thereto when the radio connection (association procedure) is set up. It follows that, given a first node connected to a second node by means of a link coming under a first port of said first node, a procedure of link change, for example induced by the movement of said first node and comprising connection of the first node to a third node instead of to the second node, entails removal of the first link with the second node and setting-up of a new link with the third node, said new link necessarily coming under, on the side of the first node, a port other than said first port.

Operatively, the migration, from a first node, of a link with a second node to a third node, for example in the event of a handover procedure, and the consequent new assignment of the MAC-bridge ports associated to the link in question, is equivalent to a topology change in compliance with the specifications envisaged by the 802.1D standard. For the purposes of the present invention, both the details of implementation of the procedures that enable link change and the format effectively used for encoding a port (for example, the format of the identifier) are not important.

Given the above premises and assuming setting-up of a new link 3 between the node F and the node G (link not illustrated) and moreover simultaneous blocking of the link between the node F and the node B, the operations performed by the node F are:
- changing the state of the port coming under which is the new link 3 between the node F and the node G from blocking state to forwarding state;
- changing the state of the port coming under which is the link between the node F and the node B from forwarding state to blocking state; and
- informing the rest of the network of the topological reconfiguration currently in progress by sending a TCN BPDU through the root port, i.e., in the direction of ascent (in the example considered, towards the node G).

Both STP and RSTP are such that, after a reconfiguration of the network topology, they lead to a state of the network in which a high number of entries (RSTP), or even all the entries, are removed from the filtering databases of the various nodes. The 802.1D standard does not envisage any special updating procedure of the filtering databases. In fact, as described previously, each filtering database is updated only following upon reception of a data frame (MPDU). In other words, the 802.1D standard envisages that the entries will be updated individually and only following upon generation of traffic by the network devices. Consequently, at each topology change, the obsolete entries are removed and are reinserted only following upon reception of a new frame containing, as source MAC address, the MAC address of the entry eliminated, i.e., sent by the network device to which the entry itself referred. Since, in the case where there is not present in the filtering database an entry corresponding to the destination MAC address of a frame received, the frame is replicated and forwarded on all the ports of the MAC bridge (except on the port by which it was received), there follows an increase of traffic within the network whenever a topology change occurs.

In the case of wired networks, the problem of the increase in traffic at each reconfiguration of the network topology it is not particularly critical. In fact, within networks of said type, topology changes, for example due to faults in the links, or else to entry of a new node in the network, rarely occur. Instead, in the case of wireless networks, and in particular in the case of wireless networks of a meshed type that make use of the procedures described in the 802.1D standard as routing method, the nodes are subject to frequent displacements, with consequent multiplication of the operations of flushing of entries from and reinsertion of entries into the filtering databases, and generation of frequent and continuous traffic peaks.

The aim of the present invention is to provide a group-learning method for a network having a tree topology that will solve at least in part the drawbacks of the known art.

According to the present invention, a group-learning method for a network having a tree topology, a node for a communications network, a communications network, and a software product are provided as defined in Claims 1, 10, 11, and 14, respectively.

For a better understanding of the invention, an embodiment thereof is now described, purely by way of non-limiting example and with reference to the attached drawings, wherein:
- Figures 1a, 1b are schematic illustrations of an example of network, in two different instants of time;
- Figure 2 is a schematic illustration of a second example of network; and
- Figures 3a, 3b are schematic illustrations of a further example of network, in two different instants of time.

The present invention envisages carrying out, following upon network-topology changes, the operations described below.
a) For each node that changes its own root port by replacing an old root port with a new root port, the contents of its own filtering database are changed by replacing, in all the entries that contain the old root port, the new root port; i.e., the entries previously associated to the old root port are made to migrate onto the new root port. In addition, an updating message is sent in the direction of ascent, i.e., onto its own root port, and some entries specified below are deleted from the filtering database. In particular, the updating message contains the MAC address of the node (creator node) and a list of MAC addresses containing in turn all the MAC addresses still valid. Considered as MAC addresses that are still valid are the MAC addresses contained in the filtering database of the node, except for the MAC addresses associated to the following forwarding ports Pₒᵤₜ: i) the old root port; ii) the new root port; and iii) possible ports that are not root ports of the node considered and that, before sending of the updating message, have changed state as a result of the topology change in progress. Furthermore, deletion from the filtering database regards the entries the forwarding ports Pₒᵤₜ of which are those specified in i), ii) and iii).
b) For each node that receives the current updating message from a reception port Pin that is not a root port, i.e., that receives the current message in the direction of ascent, the current updating message and the reception port Pin are stored, said current updating message being stored for a storage time Tₘ calculated starting from the instant of reception of the message itself, and then being deleted. If previous updating messages are not present in memory, the filtering database of the node is updated by creating or updating the entries regarding the MAC addresses contained in the current updating message (MAC address of the creator node and addresses in the list of MAC addresses), and indicating as forwarding port Pₒᵤₜ the reception port Pᵢₙ. Instead, if previous updating messages are present in memory, the current updating message is compared with the previous stored messages so as to determine a first subset and a second subset of MAC addresses, as explained hereinafter, and then the filtering database is updated by associating the reception port Pin to the MAC addresses of the first subset and deleting from the filtering database the entries corresponding to the MAC addresses contained in the second subset. The first subset of MAC addresses comprises the MAC addresses contained exclusively in the current updating message (not contained in possible previous stored messages) and the MAC addresses contained both in the current updating message and in the previous updating messages received by the same reception port Pin. The second subset of MAC addresses comprises the MAC addresses contained both in the current updating message and in previous updating messages, but received by ports other than the current reception port Pᵢₙ. Operatively, removing from the filtering database the entries regarding MAC addresses that appear in a number of updating messages, but are received by different ports, means eliminating from the filtering database the network devices for which contrasting information is available (reception ports Pᵢₙ). Finally, the node forwards the updating message through the root port.
c) For each node that receives the current updating message from its own root port, i.e., in the direction of descent, the operations referred to in point b) are repeated, with the difference that the updating message is then forwarded in broadcast, i.e., not only through the root port of the node, but also through all the ports of the node, except for the reception port Pin.

The use of the storage time Tₘ enables detection of contrasting information, for example in the case of variations of the network topology, and deletion of said contrasting information from the filtering database. The duration of the storage time Tₘ can be determined according to the spanning-tree algorithm adopted. For example, in the case of STP, it can be set equal to twice the forward delay, as calculated according to the STP itself.

As regards the ports, each node identifies its own root port on the basis of procedures envisaged by the spanning-tree algorithm effectively adopted, in a way in itself known. Also the identification, by a node, of the ports that have changed state during the topology change in progress occurs on the basis of the spanning-tree algorithm implemented; for example, in the STP case, the MAC addresses present in the filtering database, but associated to ports in listening state, are not inserted in the updating message. Furthermore, when a node changes root port, it modifies its own filtering database deleting the entries regarding the old root port and the addresses possibly associated (before the change) to the new root port, and associating to the new root port the addresses previously associated to the old root port.

As regards the MAC address of the node that generates an updating message (creator node), it can be inserted within a data portion ("payload") of the updating message itself, as likewise the list of the MAC addresses.

Described in what follows is an example of execution of the operations referred to above.

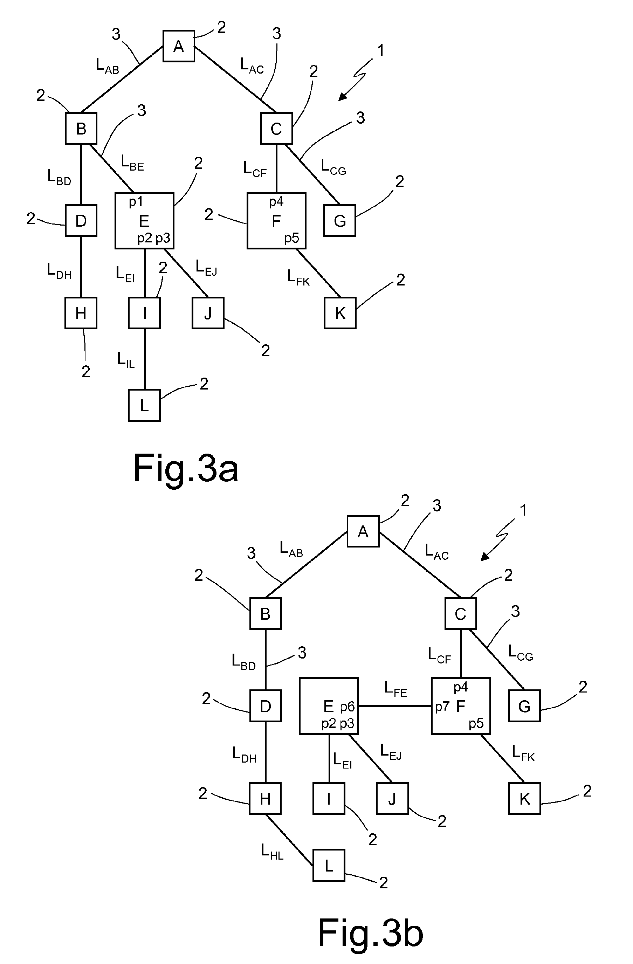

By way of example, consider the network 1 illustrated in Figures 3a and 3b, regarding two different instants in time, respectively the instant T₁ and the instant T₂ > T₁.

The network 1 comprises a plurality of nodes 2, identified in what follows as A-L and connected to one another by links 3, identified as L_{AB}, L_{AC}, L_{BD}, L_{BE}, L_{CF}, L_{CG}, L_{DH}, L_{EI}, L_{EJ}, L_{FK}, L_{IL}. The procedure described is illustrated, purely by way of example, with particular reference to the operations performed by the node E and by the node F.

At the instant T₁ (Figure 3a), the node E has available three ports p1, p2 and p3, with which it is respectively connected to the nodes B, I and J. Furthermore, it is assumed that at the instant T₁ the filtering database of the node E comprises entries regarding all the other nodes 2 of the network. In detail, the entries regarding the nodes I, J and L (i.e., comprising both the corresponding MAC addresses and the possible MAC addresses of the user terminals connected to said nodes) have as respective forwarding ports Pₒᵤₜ the ports p2, p3 and p2, whilst the entries regarding the remaining nodes 2 of the network have as forwarding port Pₒᵤₜ the port p1, which is the root port of the node E.

At the instant T₁ (Figure 3a), the node F has available two ports p4, p5, with which it is respectively connected to the nodes C and K.

Assume that in the time interval comprised between the instant T₁ and the instant T₂ the network 1 undergoes the following topology changes: the links L_{BE} and L_{IL} are suppressed, whereas the links L_{HL} and L_{FE} are set up. As regards in particular the node E, it sets up the new link L_{FE} with the node F by means of a new port p6; in turn, the node F is connected to the node E by means of a port p7 of its own.

The node E migrates all the entries associated to the preceding root port p1 to the new root port p6; i.e., it inserts into the corresponding entries, as forwarding port Pₒᵤₜ, the new root port p6, leaving all the remaining entries contained in the filtering database unaltered. Consequently, following upon updating, in the filtering database the entries regarding the nodes I, J, L have as respective forwarding ports Pₒᵤₜ the ports p2, p3 and p2, whilst the entries regarding the remaining nodes 2 of the network have as forwarding port Pₒᵤₜ the port p6.

After changing the root port, the node E forwards in the direction of ascent, i.e., through the port p6 (towards the node F), an updating message containing its own MAC address and a list of MAC addresses that contains the MAC addresses of the nodes I, J and L and of the user terminals possibly connected to itself or to the nodes I, J, L.

Once the node F has received the updating message through its own port p7, and assuming that no previous messages are present in memory, it updates its own filtering database as regards the MAC addresses contained in the updating message itself. In the case in point, the node F creates, if they are absent, or else updates, if they are present, entries corresponding to the MAC addresses contained in the updating message (MAC addresses of the nodes E, I, J, L, and possible user terminals connected thereto), assigning to these entries, as forwarding port Pₒᵤₜ, the port p7. Next, the node F forwards the updating message in the direction of ascent, i.e., through the port p4.

The procedure is iterated until the updating message is received by the root bridge A, which forwards it on all its own ports, except for the port through which it has received the updating message itself. Consequently, the updating messages ascend the network tree in "unicast", whereas they descend the network tree in "broadcast".

As regards suppression of the link L_{IL} and setting-up of the link L_{HL}, the node E is not aware of said topology changes in so far as they regard links that do not come under ports of the node E itself. Consequently, the presence in the updating message generated by the node E of the MAC address of the node L no longer corresponds to the real possibility, by the node E, of reaching the node L. However, in a way similar to what has been described above for the node E, the node L forwards towards its own new root port (the port with which it connects to the node H), an updating message containing its own MAC address and a list of MAC addresses. Said list is empty in the case where no user terminals are connected to the node L. The message thus created is iteratively distributed along all the subtrees of the network other than the subtree to which the node L itself belongs, in the case in point along the subtree comprising the nodes C, E, F, G, I, J, K, in addition to the network nodes ascended by the updating message (nodes H, D, B, A). On the basis of the procedures described, a generic network node 2 that receives the two updating messages generated, respectively, by the node E and by the node L, flushes the entries regarding the node L and regarding the possible user terminals connected thereto, in this way avoiding storage of incorrect information. Given the progressive deletion from the memory of the updating messages received, the generic node 2 then acquires information regarding the correct node L upon reception of subsequent data frames sent by the node L in the course of normal operation of the network 1, as envisaged by the learning procedure described.

In this way, a simple and fast updating of the filtering database is guaranteed, limiting generation of traffic subsequent to topology changes. Furthermore, possible conditions of contrasting information are handled easily.

The present group-learning method can find advantageous use in networks operating in compliance with standards of the IEEE 802 family, whether they are of a wired type or of a wireless type. In particular, the present method can be applied also in the case of networks that comply with the IEEE 802.1Q standard (virtual LANs). In addition, said method can be applied also in networks that do not comply with standards of the IEEE 802 family, but operate on the basis of a tree topology, obtained by means of spanning-tree algorithms similar to the ones described, and that make use of data-link-layer devices as network nodes.

Finally, it is clear that modifications and variations may be made to the group-learning method described, without thereby departing from the scope of the present invention, as defined by the annexed claims.

In particular, as regards the operations referred to in point (b), previously described, these may not be limited to forwarding of the updating message only in the direction of "ascent", but may include forwarding of said message in broadcast, in a way similar to the operations referred to in point (c) in order to carry out a refresh of the filtering databases also of nodes not directly involved in the topology change in progress.

Furthermore, the updating message can be encapsulated within frames such as, for example, data frames, BPDU frames, frames of a "Generic Attribute Registration Protocol" (GARP) type, etc. Likewise, the format and organization of the information contained in the updating message can be chosen in an arbitrary way, for example so as to reduce the data exchanged as a whole.

Finally, in the specific case of RSTP, it is possible to integrate the updating message in a TCN BPDU so as to exploit the functions, envisaged in RSTP but not in STP, of forwarding of the TCN BPDU frame to all the nodes constituting the network and involved in the topology change in progress.

## Claims

1. A group-learning method for a network (1) having a tree topology and comprising a plurality of nodes (2), each node being provided with a network address, being connected to other nodes by means of a plurality of ports (p1-p7), and implementing a data structure configured so as to contain a plurality of node addresses, each associated to a corresponding port (Pₒᵤₜ) of said node, said plurality of ports comprising at least one root port, through which each node communicates with a root node (A) of said tree topology, and a reception port, through which each node receives messages, said method comprising the steps of:
a) for each node that changes the root port by replacing an old root port with a new root port, sending through said new root port a current updating message, containing a set of node addresses;
b) for each node that receives said current updating message from a respective reception port (Pin), storing said current updating message and said reception port for a storage time (Tₘ); and verifying if previous updating messages are stored; updating said data structure on the basis of said set of node addresses, of said reception port, and of whether previous updating messages are stored.

2. The group-learning method according to Claim 1, further comprising the step of forwarding said updating message by each node that receives said updating message.

3. The group-learning method according to Claim 1 or Claim 2, wherein said step of updating said data structure comprises:
- if no previous updating messages are stored, updating said data structure of said node that receives said current updating message, associating said reception port to said set of addresses;
- if previous updating messages are stored, comparing said current updating message with said previous updating messages so as to determine a first subset and a second subset of addresses of said set of addresses, updating said data structure of said node by associating said reception port to the addresses of said first subset of addresses and deleting the addresses comprised in said second subset of addresses.

4. The group-learning method according to Claim 3, wherein said first subset of addresses comprises addresses contained exclusively in said current updating message and addresses contained both in said current updating message and in previous updating messages, received by said reception port; and wherein said second subset comprises addresses contained both in said current updating message and in previous updating messages, received by ports other than said reception port.

5. The group-learning method according to Claim 2, wherein said step of forwarding said current updating message comprises:
- if said reception port is other than said root port, forwarding said current updating message through said root port; and otherwise
- forwarding said current updating message through all the ports of said node that has received said current updating message other than said reception port.

6. The group-learning method according to any one of the preceding claims, wherein said set of addresses of said current updating message comprises the address of said node that changes the root port and possible addresses contained in said data structure of said node, except for the addresses associated to said old root port, to said new root port, and to possible pre-set ports.

7. The group-learning method according to any one of the preceding claims, further comprising the step of:
- for each node that changes the root port, deleting from the data structure of said node the addresses associated to said old root port, to said new root port, and to possible pre-set ports.

8. The group-learning method according to Claim 6 or Claim 7, wherein said pre-set ports comprise ports set in a learning state.

9. The group-learning method according to any one of the preceding claims, further comprising the step of:
- for each node that changes root port, associating, in said data structure, the new root port to the addresses previously associated to the old root port.

10. A node for a communications network, having functionalities of a bridge type and configured to implement the group-learning method according to any one of the preceding claims.

11. A communications network comprising a plurality of nodes, wherein said nodes are configured to implement the group-learning method according to any one of Claims 1 to 9.

12. The communications network according to Claim 11, wherein said nodes are further configured to operate in compliance with the standard 802.1D.

13. The communications network according to Claim 12, wherein said communications network is of a wireless type.

14. A software product loadable into a memory of a node for a communications network and configured to implement, when run, the group-learning method according to any one of Claims 1 to 9.
